**Europäisches Patentamt**

**European Patent Office**

**Office européen des brevets**

(11) Numéro de publication : **0 367 643 B1**

(12) **FASCICULE DE BREVET EUROPEEN**

(45) Date de publication du fascicule du brevet :
**02.12.92 Bulletin 92/49**

(51) Int. Cl.$^5$ : **F16D 65/58**

(21) Numéro de dépôt : **89402717.6**

(22) Date de dépôt : **03.10.89**

(54) **Entretoise à réglage automatique pour frein à tambour.**

(30) Priorité : **25.10.88 FR 8813905**

(43) Date de publication de la demande :
**09.05.90 Bulletin 90/19**

(45) Mention de la délivrance du brevet :
**02.12.92 Bulletin 92/49**

(84) Etats contractants désignés :
**DE ES FR GB IT**

(56) Documents cités :
**EP-A- 0 077 726**
**DE-A- 2 530 930**
**DE-A- 3 702 791**
**FR-A- 2 155 321**
**FR-A- 2 511 457**
**FR-A- 2 537 230**
**US-A- 4 217 973**

(73) Titulaire : **BENDIX EUROPE Services Techniques S.A.**
**126 rue de Stalingrad**
**F-93700 Drancy (FR)**

(72) Inventeur : **Maligne, Jean-Charles Bendix France**
**Division Technique 126, rue de Stalingrad**
**F-93700 Drancy (FR)**
Inventeur : **Magnaval, Jean-Louis Bendix France**
**Division Technique 126, rue de Stalingrad**
**F-93700 Drancy (FR)**

## Description

La présente invention concerne les freins à tambour pour véhicule automobile et, plus particulièrement une entretoise à réglage automatique pour un tel frein.

On connaît différents systèmes permettant d'allonger automatiquement la distance entre les extrémités déplacées par le moteur de frein de deux segments garnis d'éléments de friction d'un frein à tambour en fonction de l'usure de ces derniers.

Le document US-A-4 217 973 décrit, par exemple, un système à entretoise de longueur fixe et à levier articulé sur l'un des segments. Un tel système, même s'il fonctionne parfaitement bien, présente un inconvénient à la maintenance du frein ; en effet, le levier articulé doit être changé en même temps que le segment correspondant en cas d'usure de ce dernier.

Le document EP-A-0 077 726 décrit un système à entretoise de longueur variable comportant un ensemble vis-écrou commandé par un cliquet sollicitant une denture. Un tel système fonctionne également parfaitement bien, mais présente l'inconvénient d'être coûteux.

Le document FR-A-2 155 321 décrit également un système à entretoise de longueur variable, mais comportant un levier en équerre déplacé angulairement dont l'un des bras coopère avec un élément denté d'une autre partie de l'entretoise. Un tel système présente l'inconvénient majeur d'un fort encombrement dû à la présence de ce levier en équerre.

On sait que les constructeurs d'automobiles désirent utiliser des freins à tambour à réglage automatique fiable mais peu coûteux, et n'occupant pas un espace important de manière à pouvoir disposer dans le frein le capteur de vitesse requis pour le fonctionnement des dispositifs d'antiblocage de roues.

On atteint ce but selon l'invention avec un système linéaire de réglage automatique.

L'invention concerne donc une entretoise à réglage automatique pour frein à tambour, destinée à être montée au voisinage d'un moyen de serrage disposé entre les extrémités mobiles de deux segments garnis d'éléments de friction. Cette entretoise comprend essentiellement une première partie qui est en appui par une de ses extrémités sur un premier segment, une deuxième partie qui est en appui par l'extrémité opposée sur le second segment, les première et deuxième parties étant montées coulissantes longitudinalement l'une par rapport à l'autre, un élément de verrouillage dont au moins une partie de la périphérie comporte une denture, monté mobile sur l'une des première et deuxième parties et susceptible d'engrener avec une denture correspondante prévue en regard sur une partie de la périphérie de l'autre des première et deuxième parties et un ressort de traction fixé à l'une des première et deuxième parties et à l'élément de verrouillage pour maintenir l'engrènement entre les dentures et pour imprimer un mouvement de rotation audit élément de verrouillage dès lors que lesdites dentures ne s'engrènent plus de manière à déterminer un dispositif d'allongement automatique de la distance entre les extrémités opposées des première et deuxième parties respectivement en appui sur l'un des segments en fonction de l'usure des éléments de friction.

Une telle entretoise est décrite dans FR-A-2 511 457. Toutefois la conception de cette entretoise est telle qu'elle nécessite l'utilisation d'une pince élastique pour imprimer un mouvement à l'élément de verrouillage, cette pince étant un élément très fragile par rapport à un frein à tambour.

Selon l'invention, l'élément de verrouillage qui est monté mobile en rotation autour de son axe lui-même mobile en translation longitudinale dans une lumière pratiquée dans ladite une partie affecte la forme d'une came dentée sur sensiblement la moitié de sa périphérie et dont le mouvement de rotation a pour effet d'augmenter la distance entre l'axe et la zone d'engrènement des dentures.

L'invention concerne également un frein à tambour à réglage automatique comprenant deux segments garnis d'éléments de friction susceptibles d'être sollicités en engagement de friction contre un tambour tournant par un moyen de serrage disposé entre deux premières extrémités des segments et comportant une entretoise du type précédemment décrit et placée au voisinage du moyen de serrage.

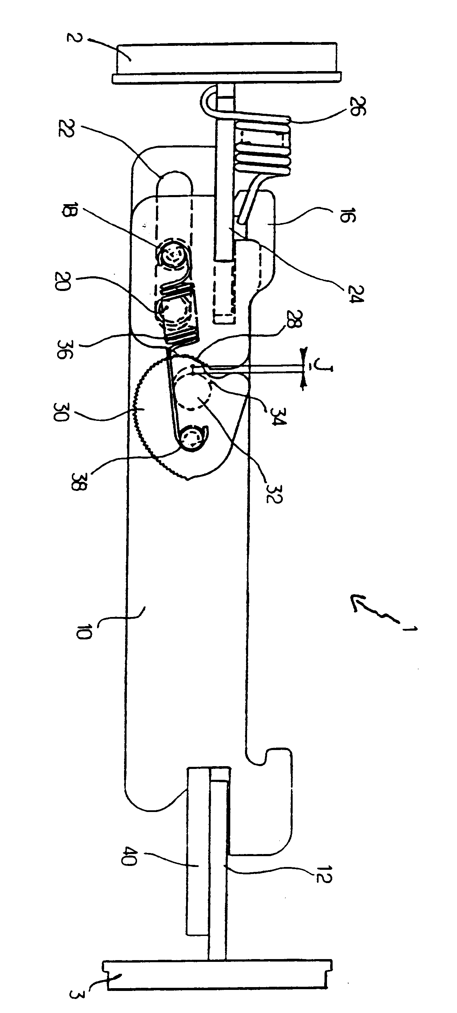

L'invention sera mieux comprise et d'autres buts, avantages et particularités de celle-ci apparaîtront plus clairement à la lecture de la description qui suit d'un mode de réalisation préféré donné à titre non limitatif en liaison avec le dessin annexé sur lequel :

la Figure unique représente schématiquement une entretoise conforme à la présente invention.

En référence maintenant à cette Figure unique, l'entretoise 1 détermine une longueur variable entre deux segments de frein 2,3 en fonction de l'usure des éléments de friction dont ils sont garnis. Cette entretoise 1 comprend une première partie 10 en appui sur le segment 3 par exemple par l'intermédiaire du levier de frein à main 40 ou de l'âme 12 du segment. Cette partie 10 est donc asservie en translation au segment 3 par exemple au moyen d'un ressort non représenté.

L'entretoise 1 comprend également une deuxième partie 16 qui est en appui sur l'autre segment 2 par l'intermédiaire de l'âme 24 de celui-ci. Elle est donc asservie en translation au segment 2 par exemple au moyen du ressort 26.

Les première et deuxième parties 10,16 sont montées coulissantes en translation l'une par rapport à l'autre. A cet effet, une lumière oblongue 22 est pratiquée dans la première partie 10 tandis que la deuxième partie 16 porte deux axes alignés 18 et 20 coulissant dans cette lumière 22, de manière à déterminer un élément de guidage des deux parties l'une par rapport à l'autre.

La deuxième partie 16 de l'entretoise porte, sur sa périphérie en regard de l'autre segment 3 un secteur denté 28.

Un élément de verrouillage 30 en forme de came dentée est montée mobile en rotation autour de son axe 32 qui peut lui-même se déplacer en translation longitudinale dans une lumière oblongue 34 pratiquée à cet effet dans la première partie 10 de l'entretoise 1. La différence entre la longueur de cette lumière 34 et le diamètre de l'axe 32 détermine ce que l'homme du métier appelle le "jeu fonctionnel" J.

Un ressort de traction 36 est fixé d'une part par exemple à la deuxième partie 16 de l'entretoise 1 par l'intermédiaire de l'axe 18 et d'autre part à la came dentée 30 en un point 38 distant de l'axe de rotation 32 de la came dentée, de manière à maintenir l'engrènement des dentures de la came dentée et de la deuxième partie 16 de l'entretoise, et à imprimer à cette came dentée 30 un mouvement de rotation dès que ces dentures ne s'engrènent plus.

L'homme du métier remarquera que la distance entre l'axe de rotation 32 de la came dentée et la périphérie dentée de celle-ci augmente progressivement de gauche à droite sur la Figure et que le mouvement de rotation précité a pour effet d'augmenter la distance entre cet axe de rotation 32 et la zone d'engrènement des deux dentures.

En freinage, le moyen de serrage non représenté sur la Figure écarte les deux segments 2,3 garnis d'éléments de friction vers un tambour non représenté. Les deux parties 10,16 de l'entretoise étant respectivement asservies en translation aux segments 3 et 2, s'écartent avec les segments, les axes 18 et 20 coulissant dans la lumière oblongue 22 et maintenant l'alignement de l'ensemble. Dans un premier temps, sous l'action du ressort 36, l'axe de rotation 32 de la came dentée 30 se déplace en translation de la distance J et vient en butée dans la partie opposée de la lumière oblongue 34, annulant ainsi le jeu fonctionnel J qui permet de ne pas allonger la longueur de l'entretoise tant que l'écartement additionnel des segments lors d'un freinage ne dépasse pas cette distance J. Ainsi, si cette distance n'est pas dépassée et que le frein est relâché, le système revient à la position de repos représentée et l'entretoise ne s'est pas allongée.

Au contraire, si cette distance J est dépassée, la denture du secteur denté 28 de la deuxième partie 16 de l'entretoise 1 se désengrène de celle de la came dentée 30 qui, sous l'action du ressort 36 entre en rotation autour de son axe 32 jusqu'à ré-engrener ces dentures. Au relâchement du frein, le jeu fonctionnel J existera toujours, mais la distance entre la zone d'engrènement des dentures et l'axe de rotation 32 de la came dentée aura augmenté d'une valeur correspondant à l'écartement additionnel des segments lors du freinage moins la longueur du jeu fonctionnel J.

L'homme du métier constatera que, du fait des rayons de courbure respectifs des dentures, la zone d'engrènement des dentures est toujours située au même endroit sur le secteur denté 28 de la périphérie de la deuxième partie 16 de l'entretoise, et cela quelle que soit la position angulaire de la came dentée 30 et que, de ce fait, la longueur du secteur denté 28 prévu sur la deuxième partie 16 de l'entretoise 1, correspond sensiblement à la longueur de la zone d'engrènement des dentures quand l'entretoise est complètement allongée, ce qui permet de minimiser l'encombrement du système complet. Par suite, une denture correspondante est prévue sur environ la moitié de la périphérie de la came dentée 30.

Enfin, par un choix judicieux du point 38 d'accrochage du ressort de traction 36 sur la came dentée 30, le mouvement de rotation imprimé à cette dernière par le ressort 36 peut être annulé lorsque l'entretoise 1 est complètement allongée.

Bien que seul un mode de réalisation de l'invention ait été décrit et représenté, il est évident que l'homme du métier pourra y apporter de nombreux changements ou modifications sans sortir du cadre de l'invention telle que revendiquée. Par exemple, la lumière oblongue 22 peut être pratiquée dans l'une ou l'autre des première et deuxième parties 10,16, les axes 18 et 20 étant prévus dans l'autre partie ; l'ensemble lumière oblongue 22 - axes 18,20 peut être remplacé par tout autre moyen de guidage linéaire ; l'extrémité du ressort 36 non fixée à la came dentée 30 peut être fixée en un autre point du système dès lors que le ressort tend à maintenir l'engrènement des dentures et à imprimer un mouvement de rotation approprié à la came dentée 30 lors du désengrènement des dentures pour les re-engrèner ; les première et deuxième parties 10,16 de l'entretoise 1 peuvent être fixées aux segments correspondants par tout autre moyen qu'un ressort.

## Revendications

1. Entretoise à réglage automatique pour frein à tambour, destinée à être montée au voisinage d'un moyen de serrage disposé entre les extrémités mobiles de deux segments (2,3) garnis d'éléments de friction, ladite entretoise (1) comprenant essentiellement une première partie (10) qui est en appui par une de ses extrémités sur un premier segment (3), une deuxième partie (16) qui est en appui par l'extrémité opposée sur le second segment (2), lesdites première et deuxième parties (10,16) étant montées coulissantes longitudinalement l'une par rapport à l'autre, un élément de verrouillage (30) dont au moins une partie de la périphérie comporte une denture, monté mobile sur l'une (10) desdites première et deuxième parties et susceptibles d'engrener avec une denture correspondante (28) prévue en regard sur une partie de la périphérie de l'autre (16) desdites première et deuxième parties, et un ressort de traction (36) fixé à l'une desdites première et deuxième parties et au dit élément de verrouillage (30) pour maintenir l'engrènement entre lesdites dentures et pour imprimer un mouvement de rotation au dit élément de verrouillage (30) dès lors que lesdites dentures ne s'engrènent plus de ma m'ère à déterminer un dispositif d'allongement automatique de la distance entre les extrémités opposées desdites première et deuxiéme parties respectivement en appui sur l'un desdits segments en fonction de l'usure desdits éléments de friction, caractérisés en ce que ledit élément de verrouillage (30), qui est monté mobile en rotation autour de son axe (32), lui-même mobile en translation longitudinale dans une lumière (34) pratiquée dans ladite partie de sa périphérie, affecte la forme d'une came dentée sur sensiblement la moitié de sa périphérie et dont le mouvement de rotation a pour effet d'augmenter la distance entre ledit axe (32) et la zone d'engrènement des dentures.

2. Entretoise selon la revendication 1, caractérisée en ce que la longueur de la denture (28) prévue sur l'une desdites première et deuxième parties est sensiblement égale à la longueur de ladite zone d'engrènement lorsque ladite entretoise est complètement allongée.

3. Frein à tambour à réglage automatique comprenant deux segments garnis d'éléments de friction susceptibles d'être sollicités en engagement de friction contre un tambour tournant par un moyen de serrage disposé entre deux premières extrémités desdits segments, caractérisé en ce qu'il comporte une entretoise selon l'une quelconque des revendications précédentes et placée au voisinage dudit moyen de serrage.

**Patentansprüche**

1. Automatisch nachstellbare Strebe für eine Trommelbremse, die in der Nähe eines Andrückmittels anzubringen ist, das zwischen den beweglichen Enden zweier mit Reibungselementen versehener Segmente (2,3) angeordnet ist, welche Strebe (1) im wesentlichen einen ersten Teil (10) aufweist, der mit einem seiner Enden an einem ersten Segment (3) abgestützt ist, einen zweiten Teil (16), der mit seinem entgegengesetzten Ende an dem zweiten Segment (2) abgestützt ist, wobei der erste und der zweite Teil (10, 16) gegeneinander längsverschieblich angeordnet sind, ein Verriegelungselement (30), das zumindest entlang eines Teils seines Umfangs eine Zahnung aufweist und das auf dem ersten Teil (10) oder dem zweiten Teil beweglich angeordnet ist und mit einer zugehörigen gegenüberstehenden Zahnung (28) in Eingriff kommen kann, die auf einem Teil des Umfangs des anderen der ersten und zweiten Teile (16) angebracht ist, und eine Zugfeder (36), die am ersten oder zweiten Teil und am genannten Verriegelungselement (30) angebracht ist, um den Eingriff zwischen den genannten Verzahnungen aufrechtzuerhalten und um dem genannten Verriegelungselement (30) eine Drehbewegung aufzuerlegen, wenn die genannten Verzahnungen nicht mehr ineinander eingreifen, um eine Vorrichtung zur automatischen Verlängerung der Entfernung zwischen den einander entgegengesetzten Enden der an jeweils einem der Segmente abgestützten ersten und zweiten Teile als Funktion der Abnutzung der genannten Reibungselement zu bilden, dadurch gekennzeichnet, daß das genannte Verriegelungselement (30), das um seine Achse (32) drehbar gelagert ist, die ihrerseits längsverschieblich in einem Langloch (34) gelagert ist, das im genannten einen Teil seines Umfangs eingebracht ist, die Form eines Nockens aufweist, der im wesentlichen entlang der Hälfte seines Umfangs gezahnt ist und dessen Drehbewegung bewirkt, daß die Entfernung zwischen der genannten Achse (32) und der Eingriffszone der Zahnungen vergrößert wird.

2. Strebe nach Anspruch 1, dadurch gekennzeichnet, daß die Länge der am ersten oder zweiten Teil vorhandenen Zahnung (28) im wesentlichen der Länge der genannten Eingriffszone entspricht, wenn die genannte Strebe ganz ausgezogen ist.

3. Trommelbremse mit automatischer Nachstellung mit zwei Segmenten, die mit Reibungselementen versehen sind, die durch ein Andrückmittel in Reibeingriff mit einer sich drehenden Trommel gebracht werden können, welches Andrückmittel zwischen zwei ersten Enden der Segmente angebracht ist, dadurch gekennzeichnet, daß sie eine Strebe nach einem der vorstehenden Ansprüche aufweist, die in der Nähe des Andrückmittels angebracht ist.

**Claims**

1. Automatically adjustable spacer for a drum brake, intended to be mounted in the vicinity of a clamping means arranged between the movable ends of two shoes (2, 3) fitted with friction elements, the said spacer (1) comprising essentially a first part (10) bearing at one of its ends on a first shoe (3), a second part (16) bearing at the opposite end on the second shoe (2), said first and second parts (10, 16) being mounted slidably longitudinally relative to one another, a locking element (30), at least part of the periphery of which has a toothing mounted movably on one (10) of said first and second parts and capable of meshing with a corresponding toothing (28) provided opposite it on part of the periphery of the other (16) of said first and second parts, and a drawer spring (36) fastened to one of said first and second parts and to said locking element (30) in order to maintain the meshing between said toothings and to impart a rotational movement to said locking element (30) from the moment when said toothings no longer mesh, so as to define a device for the automatic lengthening of the distance between the opposite ends of said first and second parts bearing respectively on one of said shoes, as a function of the wear of said friction elements, characterised in that said locking element (30), which is mounted movably in rotation about its axle (32), itself movable in longitudinal translational motion in a slot (34) made in said part of its periphery, assumes the form of a cam which is toothed over substantially half its periphery and the effect of the rotational movement of which is to increase the distance between said axle (32) and the meshing zone of the toothings.

2. Spacer according to Claim 1, characterized in that the length of the toothing (28) provided on one of the said first and second parts is substantially equal to the length of the said meshing zone when the said spacer is completely extended.

3. Automatically adjustable drum brake comprising two shoes fitted with friction elements capable of being stressed in frictional engagement against a rotating drum by a clamping means arranged between two first ends of the said shoes, characterized in that it possesses a spacer according to any of the preceding claims, located in the vicinity of the said clamping means.